# EUROPEAN PATENT SPECIFICATION

(11) **EP 2 484 785 B1**
(45) Date of publication and mention of the grant of the patent: **29.01.2014**
(21) Application number: 11153085.3
(22) Date of filing: 02.02.2011
(51) Int. Cl.: C21D 1/667, C21D 9/28

(54) **Method and apparatus for the spray cooling of mechanical parts, particularly for large mechanical parts, in execution of thermal treatments**
Verfahren und Vorrichtung zum Sprühkühlen mechanischer Teile, insbesondere für große mechanische Teile, bei der Durchführung von Wärmebehandlungen
Procédé et appareil pour le refroidissement par pulvérisation de pièces mécaniques, particulièrement pour les pièces mécaniques volumineuses, lors de la réalisation de traitements thermiques

(43) Date of publication of application: 08.08.2012
(73) Proprietor: TEKEL SA, 6745 Giornico (CH)
(72) Inventor: Pedrali, Andrea, 25051 Cedegolo BS (IT)
(74) Representative: Modiano, Micaela Nadia

(56) References cited:
- DE-U1-202005 015 907
- US-A- 3 771 776
- STEWART I ET AL: "HEAT TRANSFER COEFFICIENT EFFECTS ON SPRAY COOLING", AISE STEEL TECHNOLOGY, AISE, PITTSBURG, PA, US, vol. 73, no. 7, 1 July 1996 (1996-07-01), pages 17-23, XP000630104, ISSN: 0021-1559

## Description

The present invention relates to a method and an apparatus for the spray cooling of mechanical parts, particularly for large mechanical parts, in the execution of thermal treatments.

As is known, the thermal treatments to which mechanical parts made of metallic material, usually steel, are subjected in order to improve their mechanical characteristics are based on heating, according to preset times, to a preset temperature, followed by cooling, which must occur strictly in preset times.

When cooling must be performed in short times, such as for example in quenching, water is generally used as a cooling medium, in view of its high heat conductivity coefficient and its availability at low cost, optionally mixed with specific additives.

Cooling can be performed by immersing the part to be cooled or by spraying onto its surface an adequate quantity of water or of water and additives. Spray cooling is performed generally by means of nozzles which are oriented toward the surface of the part to be cooled and dispense a jet that usually has a substantially conical shape. This shape of the jet has in fact proved to be particularly effective in removing heat from the part to be cooled.

Document US 3,771,776 discloses an apparatus for cooling an axially symmetrical metal body, using radially arranged spray nozzles. In order to locally control the cooling intensity, the distance of the spray nozzles to the surface of the metal body can be adjusted.

Experience in this kind of treatment has encountered a difficulty in achieving a reduction in cooling times. This difficulty is an important problem in the execution of thermal treatments of the latest generation of special steels, which in order to fully enhance the potential of their composition require specific thermal treatments with extremely short cooling times, and in the execution of thermal treatments of large mechanical parts, for which precision in managing the cooling process is very important.

For large mechanical parts, which during use are subject to high actuation speeds, such as for example in the case of shafts of turbines for generating electric power, it is fundamentally important that no eccentricities are generated during the quenching treatment, since such eccentricities, during the operation of the shaft, would inevitably cause the destruction of the turbine. In order to try to solve this problem, the cooling of these parts is performed by keeping the parts so that their axis is arranged vertically, but this solution may not be sufficient if it is not combined with an extremely precise management of cooling times.

The difficulty in being able to reduce cooling times beyond a certain limit arises from a physical phenomenon which is known as the Leidenfrost effect and substantially consists in the fact that when a liquid is used, in this specific case water, to strike a body that is at a temperature that is higher than a limit temperature known as the Leidenfrost point, which is higher than the evaporation temperature of that liquid, the capacity of the liquid to remove heat from the body by evaporation decreases. Substantially, when the temperature of the body is higher than the evaporation point of the liquid but below the Leidenfrost point, the liquid, upon contact with the surface of the body, evaporates instantly, whereas when the temperature of the body is above the Leidenfrost point, the liquid evaporates more slowly. This phenomenon is due to the fact that, above the Leidenfrost point, a layer of vapor forms between the surface of the body and the liquid projected onto the body and, due to the lower heat conductivity coefficient of the vapor with respect to the liquid, hinders the transmission of heat from the body to the liquid, thus hindering and delaying its evaporation.

The aim of the present invention is to solve the problem described above, by devising a method and an apparatus that make it possible to increase the effectiveness in the spray cooling of mechanical parts subjected to thermal treatments.

Within this aim, an object of the invention is to devise a method and an apparatus that make it possible to obtain a particularly uniform effect in the cooling of parts subjected to thermal treatments so as to obtain parts that have uniform mechanical characteristics along their extension, even for the case for large mechanical parts.

Another object of the invention is to provide a method and an apparatus which, thanks to the greater cooling effectiveness, allow greater elasticity in modulating the cooling of a part in order to follow a preset cooling program more easily and more precisely.

A further object of the invention is to provide an apparatus that is structurally simple and can be manufactured at low cost.

This aim, as well as these and other objects that will become better apparent hereinafter, are achieved by a method for spray cooling of mechanical parts, particularly for large mechanical parts, in the execution of thermal treatments, which consists in striking the surface of a part to be cooled with jets of a cooling liquid, characterized in that a same region of the surface of the part to be cooled is struck alternately with cone-shaped jets and with blade-shaped jets.

The method according to the invention is performed preferably by means of an apparatus for the spray cooling of mechanical parts, particularly of large size, in the execution of thermal treatments, comprising at least two nozzles which are oriented toward a region designed to receive the part to be cooled, said nozzles being suppliable with a cooling liquid and being actuatable in order to propel said cooling liquid onto the surface of the part to be cooled, characterized in that said at least two nozzles comprise at least one first nozzle adapted to emit a conical jet and at least one second nozzle adapted to emit a blade-shaped jet, said first nozzle and said second nozzle being actuatable in order to strike in sequence with their jet a same region of the surface of the part to be cooled.

Further characteristics and advantages of the invention will become better apparent from the description of a preferred but not exclusive embodiment of the method according to the invention and of an apparatus for its execution, illustrated by way of non-limiting example in the accompanying drawings, wherein:

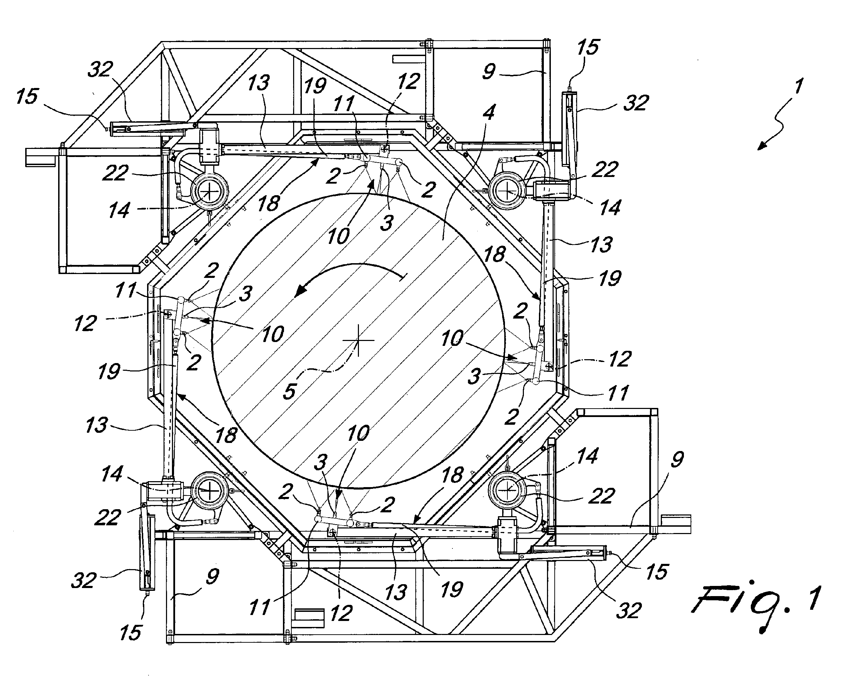

Figure 1 is a schematic view of an apparatus for performing the method according to the invention for the cooling of mechanical parts supported along a vertical axis, showing the apparatus in cross-section along a vertical plane and in a plan view from above;

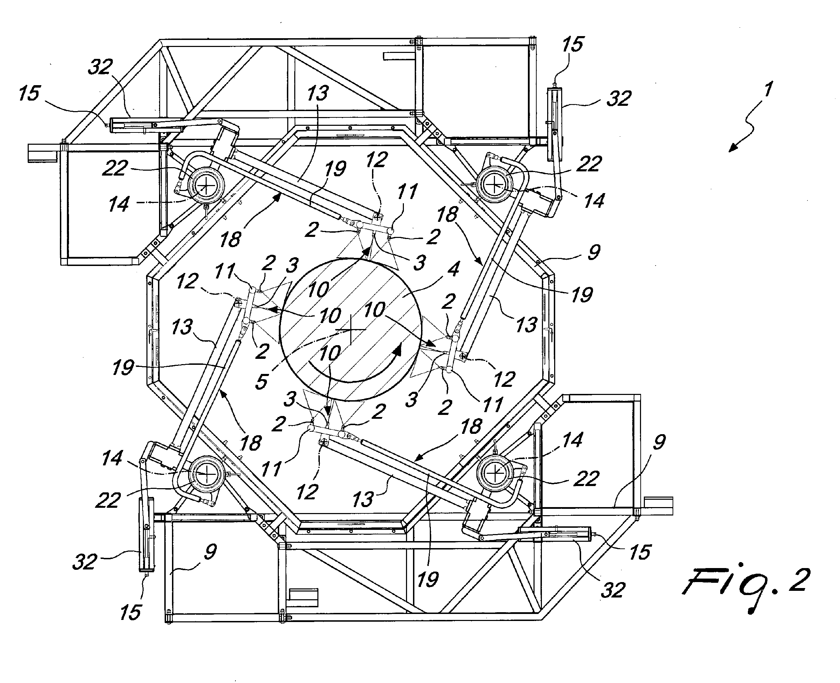

Figure 2 is a schematic view of the apparatus, similar to Figure 1, during the cooling of a part the dimensions of which are different with respect to the part shown in Figure 1;
Figure 3 is a partially sectional schematic side elevation view of a portion of the apparatus with some elements omitted for the sake of greater clarity;

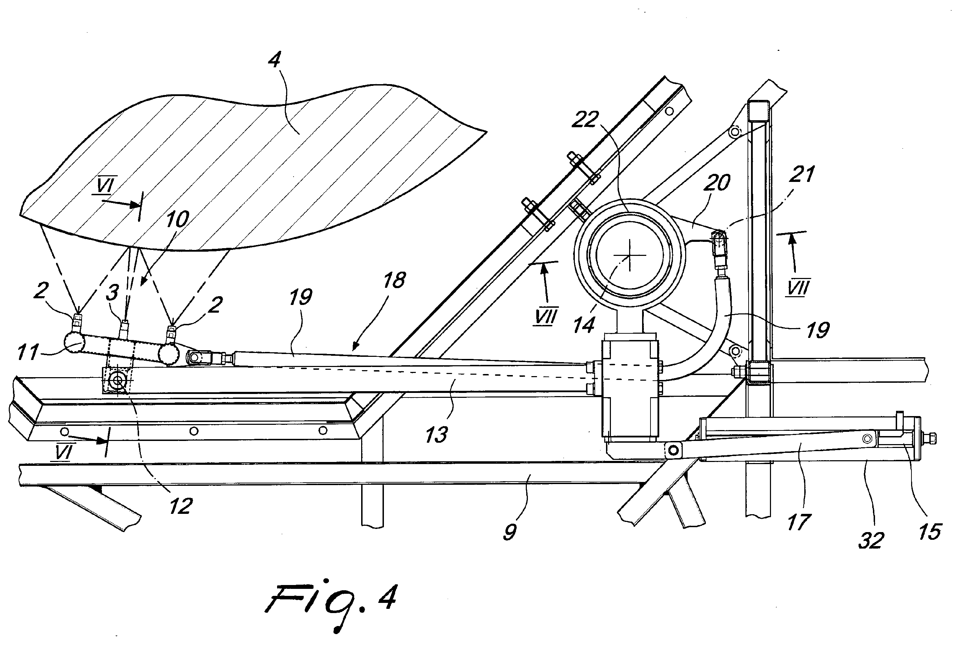

Figure 4 is an enlarged-scale view of a detail of Figure 1;
Figure 5 is a partially sectional front elevation view of a detail of the apparatus;

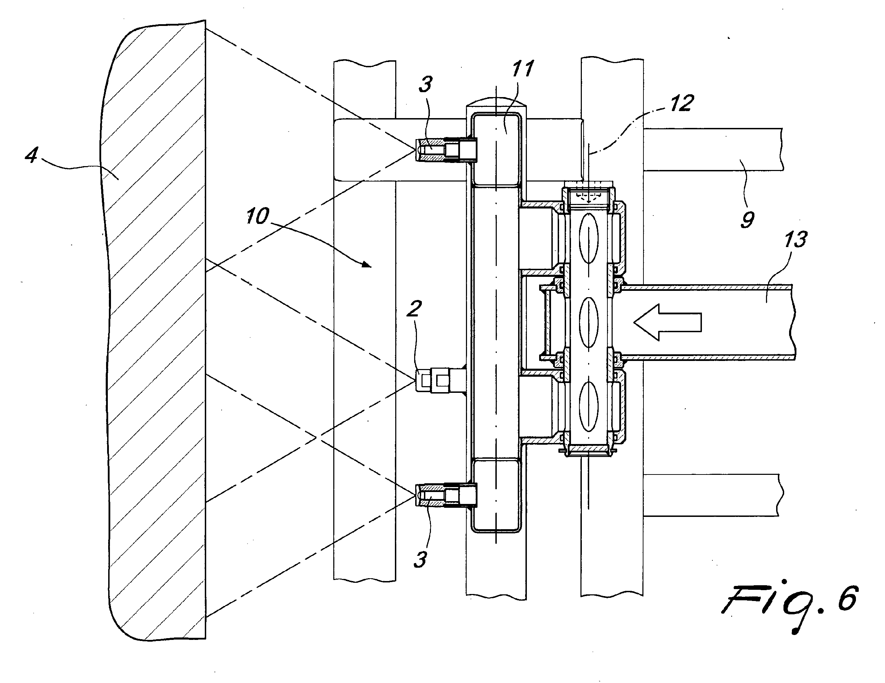

Figure 6 is a schematic sectional view of Figure 4, taken along the line VI-VI;

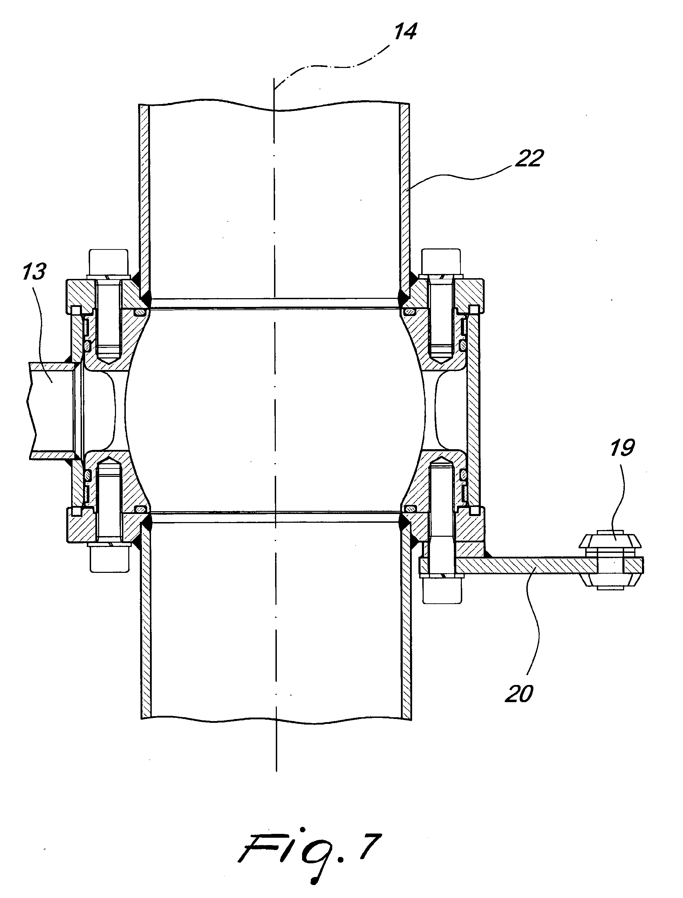

Figure 7 is a schematic sectional view of Figure 4, taken along the line VII-VII;

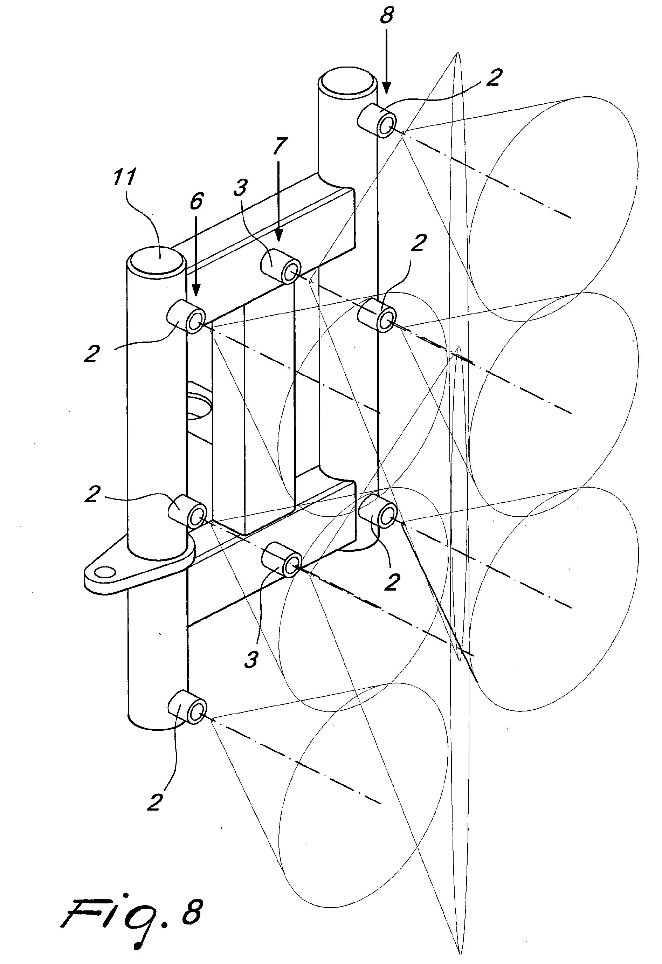

Figure 8 is a perspective view of a group of nozzles of the apparatus.

With reference to the figures, the apparatus for performing the method according to the invention, generally designated by the reference numeral 1, comprises at least two nozzles 2, 3, which are oriented toward a region that is designed to receive the part 4 to be cooled. The nozzles 2, 3 can be supplied with a cooling liquid and can be actuated in order to propel the cooling liquid onto the surface of the part 4.

According to the invention, the nozzles 2, 3 comprise at least one first nozzle 2 which is adapted to emit a conical jet and at least one second nozzle 3 which is adapted to emit a blade-shaped jet; the first nozzle 2 and the second nozzle 3 can be actuated in order to strike sequentially, with their jet, a same region of the surface of the part 4 to be cooled.

The region designed to receive the part 4 is defined by a main axis 5, which, if the part 4 has the shape of a solid of revolution or in any case a shape with a reference axis around which it can be rotated, coincides with this axis during the cooling of the part 4.

The nozzles 2, 3 are oriented toward the main axis 5 and preferably comprise at least one first row 6 of first nozzles 2 adapted to emit conical jets and at least one second row 7 of second nozzles 3 adapted to emit blade-shaped jets. The first row 6 of first nozzles 2 and the second row 7 of second nozzles 3 are oriented parallel to the main axis 5 and are angularly spaced with respect to each other about the main axis 5.

Even more preferably, there is a third row 8 of first nozzles 2 adapted to emit conical jets and the third row 8 is also oriented parallel to the main axis 5 and is angularly spaced about the same main axis 5 with respect to the rows 6 and 7. The second row 7 of second nozzles 2 is interposed between the first row 6 and the third row 8.

Conveniently, the apparatus 1 comprises means 4 for rotating the part with respect to the nozzles 2, 3 about its own axis which, as mentioned above, is made to coincide with the main axis 5. The rotation means can be constituted by a motor or gearmotor, for example an electrical one, of a known kind and not shown for the sake of simplicity, which is connected to an axial end of the part 4, which is supported by an adapted supporting structure 9, shown only partially, so as to allow rotation about the main axis 5.

Preferably, the second nozzles 3 are arranged so that the blade of their jet is oriented parallel to the main axis 5 and transversely to the direction of motion of the part 4 with respect to the nozzles 2, 3.

In the illustrated embodiment, the apparatus is designed to be used to cool mechanical parts 4, constituted by shafts or the like, which during cooling are arranged so that their axis is vertical. In this case, the main axis 5 is vertical but the orientation of the main axis 5 and consequently the arrangement of the rows 6, 7, 8 of nozzles 2, 3 may also be horizontal or inclined according to the requirements.

Conveniently, there are multiple groups 10 of nozzles 2, 3, which are distributed about the main axis 5 and along the same main axis 5 with each group 10 of nozzles 2, 3 being composed of three rows 6, 7, 8 of nozzles 2, 3.

More particularly, each group 10 of nozzles 2, 3 is mounted on a hollow frame 11, composed of tubular elements, which is associated, so that it can rotate about an axis 12, which is parallel to the main axis 5, with the end of an arm 13, which is also hollow internally and is pivoted, with its other end, to the supporting structure 9 about a pivoting axis 14, which is also parallel to the main axis 5.

In this manner, by way of the rotation of the arm 13 about the pivoting axis 14 with respect to the supporting structure 9, the approach or spacing of the corresponding group 10 of nozzles 2, 3 respectively toward or from the main axis 5 is obtained.

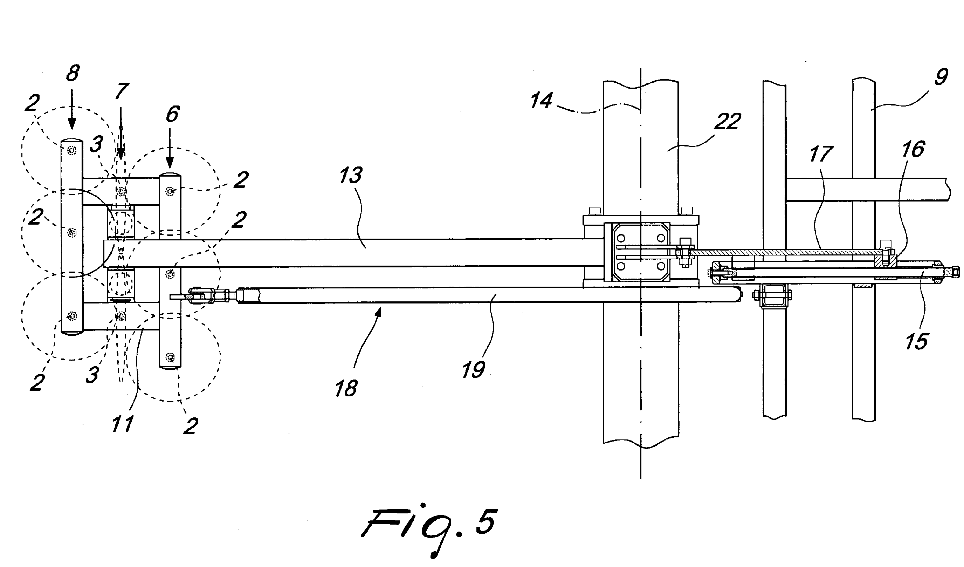

The individual rotation of each arm 13 about the pivoting axis 14 can be obtained by way of actuation means of a known type, such as for example a fluid-operated cylinder which is connected with its body to the supporting structure 9 and with the stem of its piston to the arm 13, or by means of linear actuators of the electrical type, or, as shown in particular in Figure 5, through a threaded shaft 15, which engages a female thread defined in a block 16 which is locked in rotation about the axis of the female thread by a supporting element 32 which is fixed to the supporting structure 9 and can slide parallel to the axis of the female thread with respect to the supporting element 32. The block 16 is connected, by means of a linkage 17, to the arm 13. The threaded shaft 15 can be rotated manually or with the aid of electric or pneumatic tools, such as power screwdrivers, or by means of a servomotor.

In the illustrated embodiment, in which the main axis 5 is vertical, there are four arms 13 and therefore four groups 10 of nozzles 2, 3 which are distributed about the main axis 5 at a same height level, and there are multiple groups of four arms 13 which are mutually spaced along the main axis 5, i.e., in the illustrated embodiment, located at mutually different heights.

Conveniently means 18 are provided for maintaining the orientation of the nozzles 2, 3 with respect to the main axis 5 when the distance of the nozzles 2, 3 from the main axis 5 varies.

The means 18 for maintaining orientation comprise, for each group 10 of nozzles 2, 3, a linkage 19, which is connected, with one of its ends, to an arm 20 which is fixed to the supporting structure 9 and, with its other end, to the hollow frame 11 that supports the group 10 of nozzles 2, 3. The pivoting axis 21 of the linkage of 19 to the arm 20 is spaced from the pivoting axis 14 so that when the arm 13 is rotated about the pivoting axis 14, the connection of the hollow frame 11 to the supporting structure 9, provided by means of the linkage 19, causes a corresponding rotation in the opposite direction of the hollow frame 11 about the axis 12 with respect to the arm 13, thus maintaining the orientation, with respect to the main axis 5, of the group 10 of nozzles 2, 3 supported by the arm 13. It should be noted that the length of the linkage 17 can be changed so as to correspondingly vary the preset orientation of the hollow frame 11, and therefore of the nozzles 2, 3 supported by it, about the axis 12. In the illustrated embodiment, the nozzles 2, 3 are oriented substantially radially with respect to the main axis 5, but the orientation of the nozzles 2, 3 can vary according to the requirements.

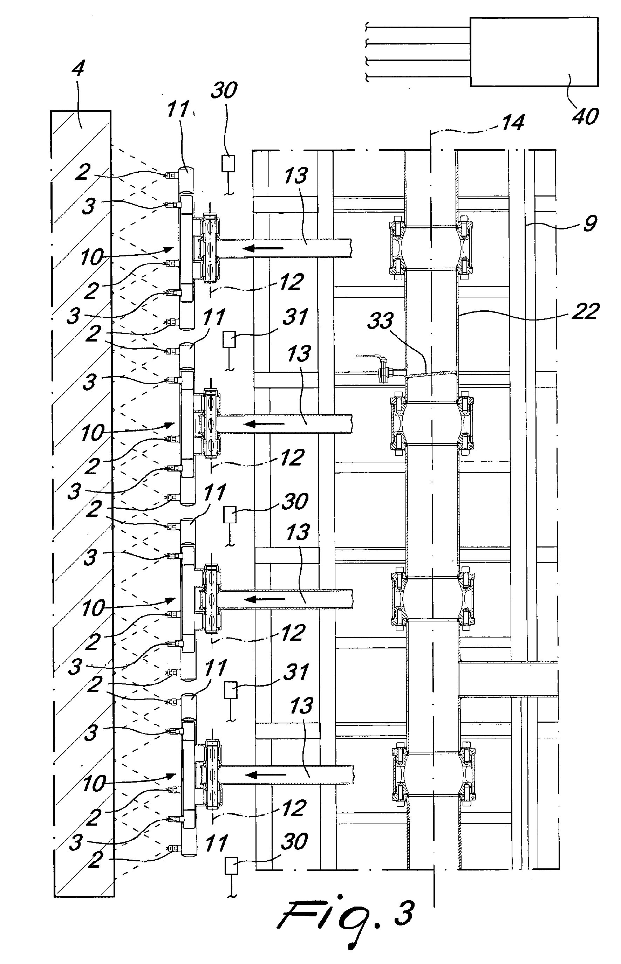

Conveniently, the apparatus 1 comprises sensors 30 for detecting the presence of the part 4 to be cooled and sensors 31 for detecting the temperature of the surface of the part 4 to be cooled, which are indicated and positioned only schematically in Figure 3.

The sensors 30, 31 of the presence of the part 4 and of the temperature of the surface of the part 4, of known type, are mutually spaced parallel to the main axis 5 and are conveniently connected to an actuation and control element 40 of the programmable electronic type, which supervises the operation of the apparatus.

The groups 10 of nozzles 2, 3 are connected individually, by means of actuatable valves, of known type and not shown for the sake of simplicity, to a line for supplying a cooling liquid, which is constituted preferably by water or by water and additives. The supply pressure of the cooling liquid can be controlled and varied, preferably for each group 10 of nozzles 2, 3, by way of means of a known type. The supply pressure of the cooling liquid can be varied by changing the number of pumps or the actuation power of the pumps that supply the cooling water to the nozzles 2, 3 and also by means of the actuatable valves, conveniently having a variable aperture, which are arranged along the supply ducts of the groups 10 of nozzles 2, 3. Optionally, the adjustment of the supply pressure of the cooling liquid can be performed individually for each one of the groups 10 of nozzles 2, 3 or for a series of groups 10 of nozzles 2, 3, for example for a series of groups 10 of nozzles 2, 3 that face toward a same region of the main axis 5. Depending on the desired type of adjustment, the number and arrangement of the actuatable valves is varied.

The flow rate of the cooling liquid dispensed through the nozzles 2, 3 can also be changed by varying the flow-rate of the liquid sent by the pumps to the nozzles 2, 3 and by varying, by means of the actuatable valves, the number of groups 10 of nozzles 2, 3 that are supplied.

The actuatable valves are preferably also connected to the control and actuation element 40, which supervises the operation of the apparatus, and are actuated by it, as will become better apparent hereinafter.

Each group 10 of nozzles 2, 3 is supplied through a duct 22, the axis of which, in the illustrated embodiment, coincides with the pivoting axis 14. The duct 22 is connected to the inside of the arm 13, which in turn is connected to the inside of the hollow frame 11 that supports the corresponding group 10 of nozzles 2, 3. The duct 22 is provided as a hollow shaft and supports, so that it can rotate about its own axis, which coincides with the pivoting axis 14, the arm 13. The rotary connections between the arm 13 and the duct 22 and between the arm 13 and a portion of the hollow frame 11, which is shaped like a hollow pivot the axis of which coincides with the axis 12, are provided in a liquid-tight manner, by means of interposed gaskets, in order to prevent outward leaks of the cooling liquid.

In the illustrated embodiment there are four ducts 22 which are arranged so that their axis, which coincides with the axis 14, is at the four corners of a right-angled prism that has a square base, the axis of which coincides with the main axis 5. Each duct 22 constitutes a hollow shaft that supports a plurality of arms 13 which are mutually spaced along the axis 14, i.e., parallel to the main axis 5.

Depending on the required degree of adjustment, each duct 22, conveniently composed of a plurality of axial modules which are mutually assembled, can be divided, by means of diaphragms 33, into axial segments, each connected to one or more groups 10 of nozzles 2, 3 and supplied independently of the other axial segments of the same duct 22 so as to be able to vary and control, for each segment of duct 22, the flow-rate and the pressure of the liquid introduced and supplied to the group 10 of nozzles 2, 3 or to the groups 10 of nozzles 2, 3 connected to that axial segment of the duct 22.

Operation of the apparatus in the execution of the method according to the invention is as follows.

The part 4 to be cooled is positioned and supported, so that it can rotate about its own axis, which is made to coincide with the main axis 5, by the supporting structure 9.

The groups 10 of nozzles 2, 3 are arranged beforehand at the required distance from the surface of the part 4 by means of a manual intervention or in an automated manner, as already described. Optionally, if this operation is performed in an automated manner, then the arrangement of the groups 10 of nozzles 2, 3 can also be actuated, and optionally varied during cooling, by means of the rotation of the corresponding arm 13 about the pivoting axis 14, by the same actuation and control element 40 that supervises the operation of the apparatus.

The actuation and control element 40, following a preset cooling program, actuates the groups 10 of nozzles 2, 3 that actually face the lateral surface of the part 4, supplying them with the cooling liquid, and keeps inactive the groups 10 of nozzles 2, 3 that either do not face the lateral surface of the part 4 due to its dimensions, detected by means of the sensors 30 of the presence of the part 4, or that must not be actuated due to cooling requirements.

Water, optionally with the addition of substances of a type known in thermal treatments, is preferably used as the cooling liquid.

During the actuation of the nozzles 2, 3, the part 4 is rotated about the main axis 5 so as to expose in succession a same region of its lateral surface to the action of the nozzles 2, 3 of a same group 10 of nozzles 2, 3. In this manner, a same region of the surface of the part 4 to be cooled is struck by the conical jets emitted by the first row 6 of first nozzles 2, then by the blade-shaped jets emitted by the second row 7 of second nozzles 3, and then by the conical jets emitted by the third row 8 of first nozzles 2.

The conical jets ensure an excellent cooling effect of the region of the part 4 that they strike, while the blade-shaped jets have the effect of removing from the surface of the part 4 the layer of vapor that forms as a consequence of the action of the conical jets, so preventing this from hindering the cooling performed by the conical jets that subsequently strike the surface of the part 4. In this manner, the apparatus for performing the method according to the invention effectively avoids, or at least reduces considerably, the Leidenfrost effect, thus achieving a higher cooling effectiveness than that obtainable with cooling apparatuses and processes of known types.

It should be noted that during the cooling of the part 4, if specific regions of the part 4 should reach temperatures that are different from the ones intended by the cooling program, then the control and actuation element 40 varies the flow-rate and/or the pressure of the liquid that is supplied to the nozzles 2, 3 so as to keep the temperature at the programmed value. In particular, if certain regions of the part 4 are cooled excessively, then the control and actuation element 40 decreases or optionally interrupts momentarily the supply of one or more groups 10 of nozzles 2, 3 at those regions.

In this manner it is possible to cool mechanical parts in a very effective way and with high precision, which cannot be obtained with the cooling apparatuses and methods of known type.

For this reason, the method and the apparatus according to the invention are adapted to be used in the execution of thermal treatments even of materials with particular compositions which are very delicate and/or difficult to treat thermally.

In practice it has been found that the method and the apparatus according to the invention fully achieve the intended aim, since they ensure high effectiveness in the spray cooling of mechanical parts subjected to thermal treatment and are capable of ensuring a particularly uniform and precise effect in the cooling of mechanical parts subjected to thermal treatment, thus making it possible to obtain parts with uniform mechanical characteristics along their extension, even for mechanical parts of considerable size.

The method and the apparatus for its execution thus conceived are susceptible of numerous modifications and variations, all of which are within the scope of the appended claims: all the details may further be replaced with other technically equivalent elements.

In practice, the materials used, so long as they are compatible with the specific use, as well as the dimensions, may be any according to requirements and to the state of the art.

## Claims

1. A method for the spray cooling of mechanical parts, particularly for large mechanical parts, in the execution of thermal treatments, which consists in striking the surface of a part (4) to be cooled with jets of a cooling liquid, **characterized in that** a same region of the surface of the part (4) to be cooled is struck alternately with cone-shaped jets and with blade-shaped jets.

2. The method according to claim 1, **characterized in that** the part (4) to be cooled is moved with respect to said jets in order to vary the region of its surface that is exposed to the action of said jets.

3. The method according to claims 1 and 2, **characterized in that** the blade of said blade-shaped jets is oriented transversely to the direction of movement of the part (4) to be cooled with respect to said jets.

4. The method according to one or more of the preceding claims, **characterized in that** said jets are directed toward a main axis (5) and **in that** the part (4) to be cooled is rotated about said main axis (5).

5. The method according to one or more of the preceding claims, **characterized in that** the blade of said blade-shaped jets is oriented substantially parallel to said main axis (5).

6. An apparatus for the spray cooling of mechanical parts, particularly large mechanical parts, in the execution of thermal treatments, comprising at least two nozzles (2, 3) which are oriented toward a region that is designed to receive the part (4) to be cooled, said nozzles (2, 3) being suppliable with a cooling liquid and being actuatable in order to propel said cooling liquid onto the surface of the part (4) to be cooled, **characterized in that** said at least two nozzles (2, 3) comprise at least one first nozzle (2) which is adapted to emit a conical jet and at least one second nozzle (3) which is adapted to emit a blade-like jet, said first nozzle (2) and said second nozzle (3) being actuatable in order to strike in sequence with their jet a same region of the surface of the part (4) to be cooled.

7. The apparatus according to claim 6, **characterized in that** said nozzles (2, 3) are oriented toward a main axis (5), said at least one first nozzle (2) comprising a first row (6) of first nozzles (2) which are adapted to emit conical jets, said at least one second nozzle (3) comprising a second row (7) of second nozzles (3) which are adapted to emit blade-shaped jets, said first row (6) of first nozzles (2) and said second row (7) of second nozzles (3) being substantially parallel to said main axis (5) and being mutually angularly spaced about said main axis (5).

8. The apparatus according to claims 6 and 7, **characterized in that** it comprises means for rotating the part (4) to be cooled about its own axis, which is arranged at said main axis (5).

9. The apparatus according to one or more of claims 6-8, **characterized in that** it comprises a third row (8) of first nozzles (2) which are adapted to emit conical jets, said third row (8) of first nozzles (2) being arranged parallel to said main axis (5) and being angularly spaced about said main axis (5) with respect to said first row (6) of first nozzles (2) and to said second row (7) of second nozzles (3), said second row (7) of second nozzles (3) being interposed between said first row (6) of first nozzles (2) and said third row (8) of first nozzles (2).

10. The apparatus according to one or more of claims 6-9, characterized and that it comprises means (13, 15, 16) for adjusting the distance of said nozzles (2, 3) from said main axis (5).

11. The apparatus according to one or more of claims 6-10, **characterized in that** it comprises means (18) for maintaining the orientation of said nozzles (2, 3) with respect to said main axis (5) as the distance of said nozzles (2, 3) from said main axis (5) varies.

12. The apparatus according to one or more of claims 6-11, **characterized in that** it comprises multiple groups (10) of nozzles (2, 3), each composed of a first row (6) of first nozzles (2), a second row (7) of second nozzles (3) and a third row (8) of first nozzles (2), each group (10) of nozzles (2, 3) being mounted on a corresponding arm (13) which is pivoted, with a portion thereof that is spaced from the corresponding group (10) of nozzles (2, 3), to said supporting structure (9) about a pivoting axis (14) which is substantially parallel to said main axis (5), means (15, 16) being provided for the rotation of each arm (13) about said pivoting axis (14) in order to vary the distance of the corresponding group (10) of nozzles (2, 3) from said main axis (5).

13. The apparatus according to one or more of claims 6-12, **characterized in that** it comprises multiple groups of arms (13), each of which supports a corresponding group (10) of nozzles (2, 3), each group of arms (13) being composed of multiple arms (13) which are distributed about said main axis (5) and the various groups of arms (13) being mutually spaced along said main axis (5).

14. The apparatus according to one or more of the claims 6-13, **characterized in that** it comprises means for the individual and/or mass actuation of said groups (10) of nozzles (2, 3).

15. The apparatus according to one or more of claims 6-14, **characterized in that** it comprises sensor means (30) for detecting the presence of the part (4) subjected to cooling, which are mutually spaced parallel to said main axis (5).

16. The apparatus according to one or more of claims 6-15, **characterized in that** it comprises sensor means (31) for detecting the temperature of the surface of the part (4) to be cooled.

17. The apparatus according to one or more of claims 6-16, **characterized in that** it comprises a control and actuation element (40) of the programmable electronic type, which is connected to said sensor means (30) for detecting the presence of the part (4) to be cooled, to said sensor means (31) for detecting the temperature of the surface of the part (4) to be cooled, to said means for the individual actuation of the groups (10) of nozzles (2, 3) and to said means (13, 15, 16) for adjusting the distance of said nozzles (2, 3) for the actuation and arrangement of said nozzles (2, 3) as a function of the temperature of the surface of the part (4) to be cooled and of its shape according to a preset cooling program.

## Patentansprüche

1. Ein Verfahren zum Sprühkühlen mechanischer Teile, insbesondere für große mechanische Teile, bei der Durchführung von Wärmebehandlungen, das darin besteht, die Oberfläche eines zu kühlenden Teils (4) mit Strahlen einer Kühlflüssigkeit zu besprühen, **dadurch gekennzeichnet, dass** derselbe Bereich der Oberfläche des zu kühlenden Teils (4) abwechselnd mit kegelförmigen Strahlen und mit klingenförmigen Strahlen besprüht wird.

2. Das Verfahren gemäß Anspruch 1, **dadurch gekennzeichnet, dass** das zu kühlende Teil (4) im Verhältnis zu den Strahlen bewegt wird, um den Bereich seiner Oberfläche zu variieren, der der Wirkung der Strahlen ausgesetzt ist.

3. Das Verfahren gemäß Anspruch 1 und 2, **dadurch gekennzeichnet, dass** die Klinge der klingenförmigen Strahlen quer zur Bewegungsrichtung des zu kühlenden Teils (4) mit Bezug auf die Strahlen ausgerichtet ist.

4. Das Verfahren gemäß einem oder mehreren der obigen Ansprüche, **dadurch gekennzeichnet, dass** die Strahlen zu einer Hauptachse (5) hin gerichtet sind und darin, dass das zu kühlende Teil (4) um die Hauptachse (5) gedreht wird.

5. Das Verfahren gemäß einem oder mehreren der obigen Ansprüche, **dadurch gekennzeichnet, dass** die Klinge der klingenförmigen Strahlen im Wesentlichen parallel zu der Hauptachse (5) ausgerichtet ist.

6. Eine Vorrichtung für das Sprühkühlen mechanischer Teile, insbesondere großer mechanischer Teile, bei der Durchführung von Wärmebehandlungen, die mindestens zwei Düsen (2, 3) umfasst,
welche zu einem Bereich hin ausgerichtet sind, der dazu dient, das zu kühlende Teil (4) aufzunehmen, wobei die Düsen (2, 3) mit einer Kühlflüssigkeit versorgt werden können und betätigt werden können, um die Kühlflüssigkeit auf die Oberfläche des zu kühlenden Teils (4) zu treiben, **dadurch gekennzeichnet, dass** die mindestens zwei Düsen (2, 3) mindestens eine erste Düse (2) umfassen, die ausgebildet ist, um einen kegelförmigen Strahl auszustoßen, und mindestens eine zweite Düse (3), die ausgebildet ist, um einen klingenförmigen Strahl auszustoßen, wobei die erste Düse (2) und die zweite Düse (3) betätigt werden können, um mit ihrem Strahl nacheinander denselben Bereich der Oberfläche des zu kühlenden Teils (4) zu treffen.

7. Die Vorrichtung gemäß Anspruch 6, **dadurch gekennzeichnet, dass** die Düsen (2, 3) zu einer Hauptachse (5) hin ausgerichtet sind, wobei die mindestens eine erste Düse (2) eine erste Reihe (6) erster Düsen (2) umfasst, die ausgebildet sind, um kegelförmige Strahlen auszustoßen, und die mindestens eine zweite Düse (3) eine zweite Reihe (7) zweiter Düsen (3) umfasst, die ausgebildet sind, um klingenförmige Strahlen auszustoßen, wobei die erste Reihe (6) erster Düsen (2) und die zweite Reihe (7) zweiter Düsen (3) im Wesentlichen parallel zu der Hauptachse (5) und zueinander winklig um die Hauptachse (5) beabstandet sind.

8. Die Vorrichtung gemäß Anspruch 6 und 7, **dadurch gekennzeichnet, dass** sie Mittel umfasst, um das zu kühlende Teil (4) um seine eigene Achse zu drehen, welches an der Hauptachse (5) angeordnet ist.

9. Die Vorrichtung gemäß einem oder mehreren der Ansprüche 6-8, **dadurch gekennzeichnet, dass** sie eine dritte Reihe (8) erster Düsen (2) umfasst, die ausgebildet sind, um kegelförmige Strahlen auszustoßen, wobei die dritte Reihe (8) erster Düsen (2) parallel zu der Hauptachse (5) angeordnet und winklig um die Hauptachse (5) von der ersten Reihe (6) erster Düsen (2) und der zweiten Reihe (7) zweiter Düsen (3) beabstandet ist, wobei die zweite Reihe (7) zweiter Düsen (3) zwischen der ersten Reihe (6) erster Düsen (2) und der dritten Reihe (8) erster Düsen (2) angeordnet ist.

10. Die Vorrichtung gemäß einem oder mehreren der Ansprüche 6-9, **dadurch gekennzeichnet, dass** sie Mittel (13, 15, 16) zur Einstellung des Abstands der Düsen (2, 3) von der Hauptachse (5) umfasst.

11. Die Vorrichtung gemäß einem oder mehreren der Ansprüche 6-10, **dadurch gekennzeichnet, dass** sie Mittel (18) umfasst, um die Ausrichtung der Düsen (2, 3) im Verhältnis zu der Hauptachse (5) beizubehalten, während der Abstand der Düsen (2, 3) von der Hauptachse (5) variiert.

12. Die Vorrichtung gemäß einem oder mehreren der Ansprüche 6-11, **dadurch gekennzeichnet, dass** sie mehrere Gruppen (10) von Düsen (2, 3) umfasst, die jeweils aus einer ersten Reihe (6) erster Düsen (2), einer zweiten Reihe (7) zweiter Düsen (3) und einer dritten Reihe (8) erster Düsen (2) bestehen, wobei jede Gruppe (10) von Düsen (2, 3) auf einem dazugehörigen Arm (13) montiert ist, der mit einem Abschnitt davon, welcher von der entsprechenden Gruppe (10) von Düsen (2, 3) beabstandet ist, um eine Drehachse (14), die im Wesentlichen parallel zu der Hauptachse (5) ist, drehgelenkig mit der tragenden Struktur (9) verbunden ist, wobei Mittel (15, 16) für die Drehung jedes Arms (13) um die Drehachse (14) bereitgestellt sind, um den Abstand der entsprechenden Gruppe (10) von Düsen (2, 3) von der Hauptachse (5) zu variieren.

13. Die Vorrichtung gemäß einem oder mehreren der Ansprüche 6-12, **dadurch gekennzeichnet, dass** sie mehrere Gruppen von Armen (13) umfasst, von denen jeder eine entsprechende Gruppe (10) von Düsen (2, 3) trägt, wobei jede Gruppe von Armen (13) aus mehreren Armen (13) besteht, die um die Hauptachse (5) herum verteilt sind, und die verschiedenen Gruppen von Armen (13) entlang der Hauptachse (5) voneinander beabstandet sind.

14. Die Vorrichtung gemäß einem oder mehreren der Ansprüche 6-13, **dadurch gekennzeichnet, dass** sie Mittel für die individuelle und/oder Massenbetätigung der Gruppen (10) von Düsen (2, 3) umfasst.

15. Die Vorrichtung gemäß einem oder mehreren der Ansprüche 6-14, **dadurch gekennzeichnet, dass** sie Sensormittel (30) zur Erfassung der Anwesenheit des Teils (4) umfasst, das einer Kühlung unterzogen wird, die parallel zu der Hauptachse (5) voneinander beabstandet sind.

16. Die Vorrichtung gemäß einem oder mehreren der Ansprüche 6-15, **dadurch gekennzeichnet, dass** sie Sensormittel (31) zur Erfassung der Oberflächentemperatur des zu kühlenden Teils (4) umfasst.

17. Die Vorrichtung gemäß einem oder mehreren der Ansprüche 6-16, **dadurch gekennzeichnet, dass** sie ein Steuer- und Betätigungselement (40) vom programmierbaren elektronischen Typ umfasst, das mit Folgendem verbunden ist: mit den Sensormitteln (30) zur Erfassung der Anwesenheit des zu kühlenden Teils (4), mit den Sensormitteln (31) zur Erfassung der Oberflächentemperatur des zu kühlenden Teils (4), mit den Mitteln für die individuelle Betätigung der Gruppen (10) von Düsen (2, 3) und mit den Mitteln (13, 15, 16) zur Einstellung des Abstands der Düsen (2, 3), für die Betätigung und Anordnung der Düsen (2, 3) in Abhängigkeit von der Oberflächentemperatur des zu kühlenden Teils (4) und von seiner Form, entsprechend einem voreingestellten Kühlprogramm.

## Revendications

1. Procédé pour le refroidissement par pulvérisation de pièces mécaniques, en particulier de pièces mécaniques volumineuses, pendant l'exécution de traitements thermiques, procédé qui consiste à heurter la surface d'une pièce (4) à refroidir par des jets d'un liquide de refroidissement, **caractérisé en ce qu'**une même zone de la surface de la pièce (4) à refroidir est heurtée alternativement par des jets en forme conique et des jets en forme de lame.

2. Procédé suivant la revendication 1, **caractérisé en ce que** la pièce (4) à refroidir est déplacée par rapport auxdits jets de façon à varier la zone de sa surface exposée à l'action desdits jets.

3. Procédé suivant les revendications 1 et 2, **caractérisé en ce que** la lame desdits jets en forme de lame est orientée, par rapport auxdits jets, transversalement à la direction de déplacement de la pièce (4) à refroidir.

4. Procédé suivant une ou plusieurs des revendications précédentes, **caractérisé en ce que** lesdits jets sont dirigés vers un axe principal (5) et **en ce que** l'on fait tourner la pièce (4) à refroidir autour dudit axe principal (5).

5. Procédé suivant une ou plusieurs des revendications précédentes, **caractérisé en ce que** la lame desdits jets en forme de lame est orientée de façon essentiellement parallèle audit axe principal (5).

6. Appareil destiné au refroidissement par pulvérisation de pièces mécaniques, en particulier de pièces mécaniques volumineuses, pendant l'exécution de traitements thermiques, appareil comprenant au moins deux buses (2, 3) qui sont orientées vers une zone conçue pour recevoir la pièce (4) à refroidir, lesdites buses (2, 3) pouvant être alimentées avec un liquide de refroidissement et actionnées de façon à propulser ledit liquide de refroidissement sur la surface de la pièce (4) à refroidir, **caractérisé en ce que** lesdites au moins deux buses (2, 3) comprennent au moins une première buse (2) qui est adaptée à émettre un jet conique et au moins une seconde buse (3) qui est adaptée à émettre un jet en forme de lame, ladite première buse (2) et ladite seconde buse (3) pouvant être actionnées de façon à heurter consécutivement avec leurs jets une même zone sur la surface de la pièce (4) à refroidir.

7. Appareil suivant la revendication 6, **caractérisé en ce que** lesdites buses (2, 3) sont orientées vers un axe principal (5), ladite au moins une première buse (2) comprenant une première rangée (6) de premières buses (2) qui sont adaptées à émettre des jets coniques, ladite au moins une seconde buse (3) comprenant une seconde rangée (7) de secondes buses (3) qui sont adaptées à émettre des jets en forme de lame, ladite première rangée (6) de premières buses (2) et ladite seconde rangée (7) de secondes buses (3) étant essentiellement parallèles audit axe principal (5) et espacées angulairement l'une par rapport à l'autre autour dudit axe principal (5).

8. Appareil suivant les revendications 6 et 7, **caractérisé en ce qu'**il comprend un moyen pour faire tourner la pièce (4) à refroidir autour de son propre axe, moyen qui est disposé sur ledit axe principal (5).

9. Appareil suivant une ou plusieurs des revendications 6 à 8, **caractérisé en ce qu'**il comprend une troisième rangée (8) de premières buses (2) qui sont adaptées à émettre des jets coniques, ladite troisième rangée (8) de premières buses (2) étant disposée parallèle audit axe principal (5) et espacée angulairement par rapport à ladite première rangée (6) de premières buses (2) et à la dite seconde rangée (7) de secondes buses (3) autour dudit axe principal (5), ladite seconde rangée (7) de secondes buses (3) étant interposée entre ladite première rangée (6) de premières buses (2) et ladite troisième rangée (8) de premières buses (2).

10. Appareil suivant une ou plusieurs des revendications 6 à 9, **caractérisé en ce qu'**il comprend des moyens (13, 15, 16) pour ajuster l'écart desdites buses (2, 3) par rapport audit axe principal (5).

11. Appareil suivant une ou plusieurs des revendications 6 à 10, **caractérisé en ce qu'**il comprend des moyens (18) pour maintenir l'orientation desdites buses (2, 3) par rapport audit axe principal (5) étant donné que l'écart desdites buses (2, 3) par rapport audit axe principal (5) varie.

12. Appareil suivant une ou plusieurs des revendications 6 à 11, **caractérisé en ce qu'**il comprend de multiples groupes (10) de buses (2, 3), dont chacun est composé d'une première rangée (6) de premières buses (2), d'une seconde rangée (7) de secondes buses (3) et d'une troisième rangée (8) de premières buses (2), chaque groupe (10) de buses (2, 3) étant monté sur un bras (13) correspondant, dont une partie est espacée du groupe (10) de buses (2, 3) correspondant, bras, qui est pivoté vers ladite structure de support (9) autour d'un axe de pivotement (14) qui est essentiellement parallèle audit axe principal (5), des moyens (15, 16) étant prévus pour la rotation de chaque bras (13) autour dudit axe de pivotement (14) de façon à varier l'écart du groupe (10) de buses (2, 3) correspondant par rapport audit axe principal (5).

13. Appareil suivant une ou plusieurs des revendications 6 à 12, **caractérisé en ce qu'**il comprend de multiples groupes de bras (13), dont chacun supporte un groupe (10) de buses (2, 3) correspondant, chaque groupe de bras (13) étant composé de multiples bras (13) qui sont répartis autour dudit axe principal (5) et les différents groupes de bras (13) sont espacés les uns des autres le long dudit axe principal (5).

14. Appareil suivant une ou plusieurs des revendications 6 à 13, **caractérisé en ce qu'**il comprend des moyens d'actionnement individuel et/ou collectif desdits groupes (10) de buses (2, 3).

15. Appareil suivant une ou plusieurs des revendications 6 à 14, **caractérisé en ce qu'**il comprend des moyens de détection (30) pour détecter la présence de la pièce (4) soumise au refroidissement, moyens qui sont espacés l'un de l'autre de façon parallèle audit axe principal (5).

16. Appareil suivant une ou plusieurs des revendications 6 à 15, **caractérisé en ce qu'**il comprend des moyens de détection (31) pour détecter la température de la surface de la pièce (4) à refroidir.

17. Appareil suivant une ou plusieurs des revendications 6 à 16, **caractérisé en ce qu'**il comprend un élément de commande et d'actionnement (40) de type électronique programmable, qui est raccordé auxdits moyens de détection (30) pour détecter la présence de la pièce (4) à refroidir, auxdits moyens de détection (31) pour détecter la température de la surface de la pièce (4) à refroidir, auxdits moyens d'actionnement individuel des groupes (10) de buses (2, 3) et auxdits moyens (13, 15, 16) d'ajustement de l'écart desdites buses (2, 3) pour l'actionnement et la disposition desdites buses (2, 3) en fonction de la température de la surface de la pièce (4) à refroidir et de sa forme selon un programme de refroidissement prédéterminé.
